# FASCICULE DE BREVET EUROPEEN

(11) **EP 1 595 750 B1**
(45) Date de publication et mention de la délivrance du brevet: **12.12.2007**
(21) Numéro de dépôt: 05300360.4
(22) Date de dépôt: 10.05.2005
(51) Int. Cl.: B60R 21/02, B60R 7/06, E05D 7/12

(54) **Dispositif d'articulation d'un volet sur un dormant dans un habitacle de vehicule automobile**
Schwenkvorrichtung für einen Deckel auf einem Rahmen in einem Fahrzeuginnenraum
Rotating mechanism for a lid on a frame in a vehicular interior

(30) Priorité: 11.05.2004 FR 0450904
(43) Date de publication de la demande: 16.11.2005
(73) Titulaire: RENAULT S.A.S., 92100 Boulogne Billancourt (FR)
(72) Inventeur: Bouas, Patrick, 91210, Draveil (FR); Coulombel, Florent, 92130, Issy les Moulineaux (FR)

(56) Documents cités:
- EP-A- 0 619 203
- DE-C- 4 142 598
- US-A- 5 413 379
- US-A- 5 829 814
- PATENT ABSTRACTS OF JAPAN vol. 2003, no. 01, 14 janvier 2003 (2003-01-14) & JP 2002 254990 A (SUZUKI MOTOR CORP), 11 septembre 2002 (2002-09-11)
- PATENT ABSTRACTS OF JAPAN vol. 0081, no. 52 (M-309), 14 juillet 1984 (1984-07-14) & JP 59 048246 A (NISSAN JIDOSHA KK), 19 mars 1984 (1984-03-19)

## Description

La présente invention se rapporte à un dispositif d'articulation d'un volet sur un dormant dans un habitacle de véhicule automobile, en particulier un charnon fixe relié au dormant et un charnon mobile relié au volet, l'articulation s'effectuant autour d'un axe transversal.

Un tel dispositif d'articulation est connu par exemple pour un volet formant une porte de boîte à gant dans la planche de bord du véhicule. Le charnon fixe et le charnon mobile sont des éléments de charnière qui sont rigides et solides pour éviter tout décrochement de la porte lors d'une manipulation brusque ou lorsqu'un objet lourd est posé sur la porte quand elle est ouverte.

En cas de choc, par exemple lors d'un accident, le genou d'un utilisateur assis sur le siège passager situé en face de la boîte à gant peut entrer en contact avec la porte, en particulier à proximité d'une charnière de la porte.

Les documents US5829814 et DE4142598 décrivent un dispositif d'articulation d'un volet de boîte à gant sur un dormant autour d'un axe transversal dans un habitacle de véhicule automobile, comportant un charnon fixe relié au dormant et un charnon mobile relié au volet. Le document DE 4 142598 comporte les caractéristiques du préambule de la revendication 1.

Dans le dispositif d'articulation du document DE4142598, les moyens de fixation du dispositif d'articulation sur la planche de bord, tout comme les moyens d'ajustement en position du dispositif d'articulation par rapport à la planche de bord, présentent l'inconvénient d'être des éléments rigides tels que des pattes vissées qui constituent des zones dures ou rigides, au préjudice éventuel d'un membre d'un passager entrant en contact avec volet lors d'un accident.

Le document US5413379 décrit un dispositif absorbeur de choc pour une porte de boîte à gant. Ce dispositif comporte un support déformable. Ce dispositif présente l'inconvénient d'être encombrant et oblige à augmenter de façon non négligeable le nombre de pièces constituant la boîte à gant.

L'invention vise à améliorer la sécurité d'un véhicule en optimisant un dispositif d'articulation d'un volet sur un dormant dans l'habitacle du véhicule, de façon à minimiser tout risque de blessure au cas où un membre d'un usager entrerait au contact du volet lors d'un accident.

L'invention a pour objet un dispositif d'articulation d'un volet sur un dormant autour d'un axe transversal dans un habitacle de véhicule automobile comportant un charnon fixe relié au dormant et un charnon mobile relié au volet. Dans le dispositif, le dormant comporte une paroi transversale de fixation. La partie avant du charnon fixe est fixée sur la paroi transversale, la partie arrière du charnon fixe est fixée au volet à l'arrière de la paroi transversale. Le dispositif constitue un dispositif de sécurité adapté à passer d'un état d'utilisation normale à un état escamoté. La fixation du charnon fixe sur la paroi transversale est adapté à se rompre lorsque le charnon fixe est soumis à un choc longitudinal de l'arrière vers l'avant, le charnon fixe se déplaçant de l'arrière vers l'avant suite à la rupture de ladite fixation lors du passage de l'état d'utilisation normale à l'état escamoté.

Avantageusement, le dispositif selon l'invention constitue un dispositif de sécurité, adapté à être utilisé pour un volet placé dans une zone d'un véhicule dans laquelle un membre d'un utilisateur assis sur un siège du véhicule est susceptible de se déplacer lors d'un choc et d'entrer en contact avec le volet ou le dispositif selon l'invention. Le dispositif est prévu pour permettre d'éviter des lésions ou de limiter des lésions.

Avantageusement, la fixation du charnon fixe sur la paroi transversale est susceptible de se rompre lorsque le charnon fixe est soumis à un choc longitudinal de l'arrière vers l'avant lors d'un accident, de manière à autoriser un déplacement du charnon fixe de l'arrière vers l'avant, au bénéfice de la sécurité.

Le dispositif peut comporter des moyens de butée longitudinale du charnon fixe de manière à limiter son déplacement.

Le dispositif peut comporter des moyens de guidage du charnon fixe lors de son déplacement.

Le dispositif peut comporter des moyens sécables de fixation du charnon fixe sur la paroi transversale.

Le charnon fixe peut comporter une platine adaptée à coopérer avec la paroi transversale.

Une face arrière de la platine peut être adaptée à coopérer avec une face avant de la paroi transversale.

Le charnon fixe peut délimiter un trou adaptée à coopérer avec un pion ménagé sur la paroi transversale.

La paroi transversale peut délimiter une ouverture à travers laquelle est engagé le charnon fixe et à travers laquelle le charnon fixe est susceptible de se déplacer après rupture de la fixation du charnon fixe sur la paroi transversale.

L'invention a également pour objet un véhicule qui comporte un dispositif tel que défini ci-dessus, le dispositif étant un dispositif de sécurité, le volet étant placé dans une zone du véhicule dans laquelle un membre d'un utilisateur assis sur un siège du véhicule est susceptible de se déplacer lors d'un choc.

Dans le véhicule, le volet peut être une porte d'un coffre d'une planche de bord adaptée à être en regard d'un genou d'un utilisateur, du type coffre de boîte à gant.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une vue en perspective de trois quart arrière et de dessus d'une planche de bord adaptée à recevoir un dispositif selon l'invention,

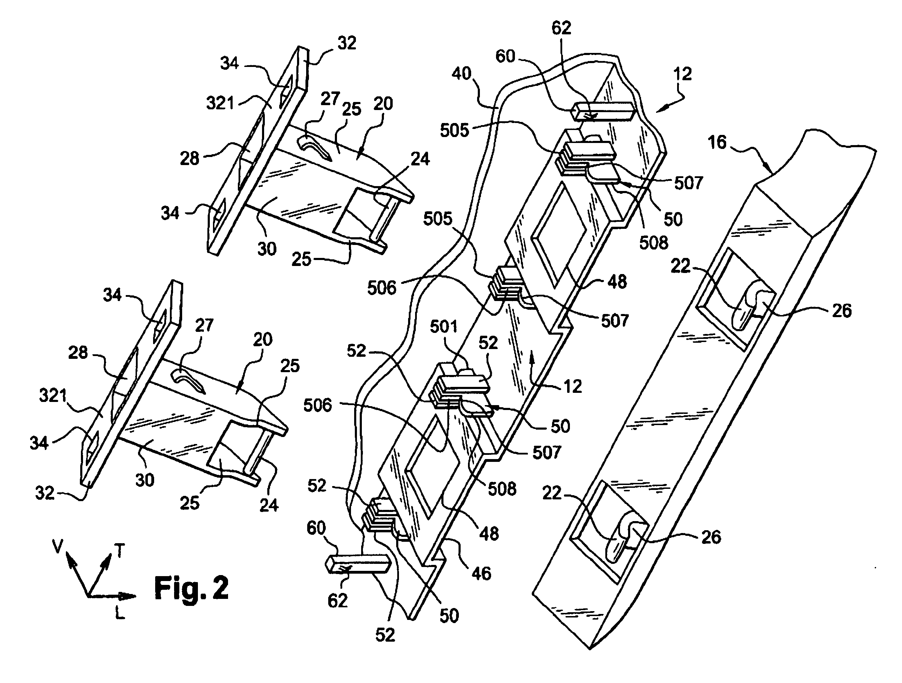

- la figure 2 est une vue en perspective de trois quart arrière et de dessous, en éclaté, d'un dispositif selon l'invention,

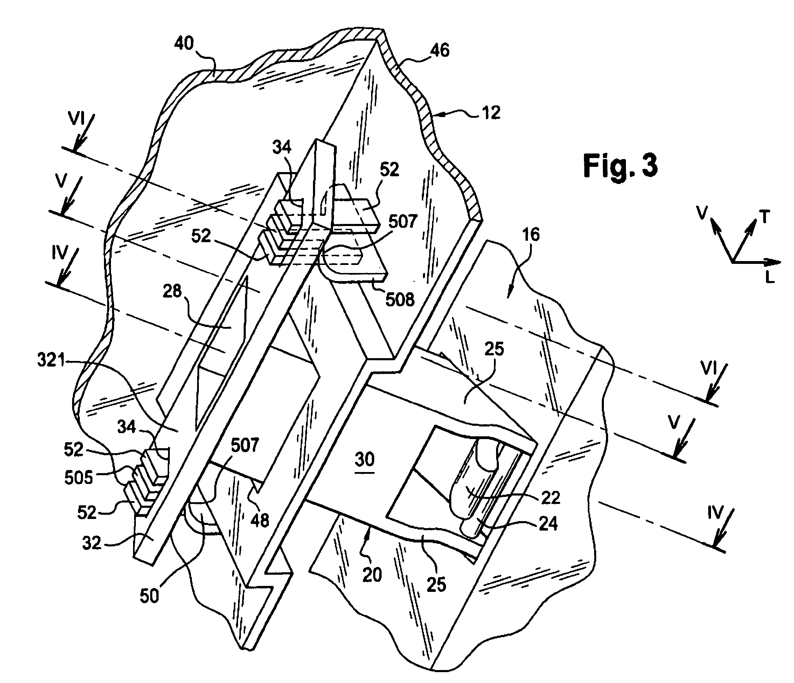

- la figure 3 est une vue en perspective de trois quart avant et de dessous, d'un dispositif selon l'invention,

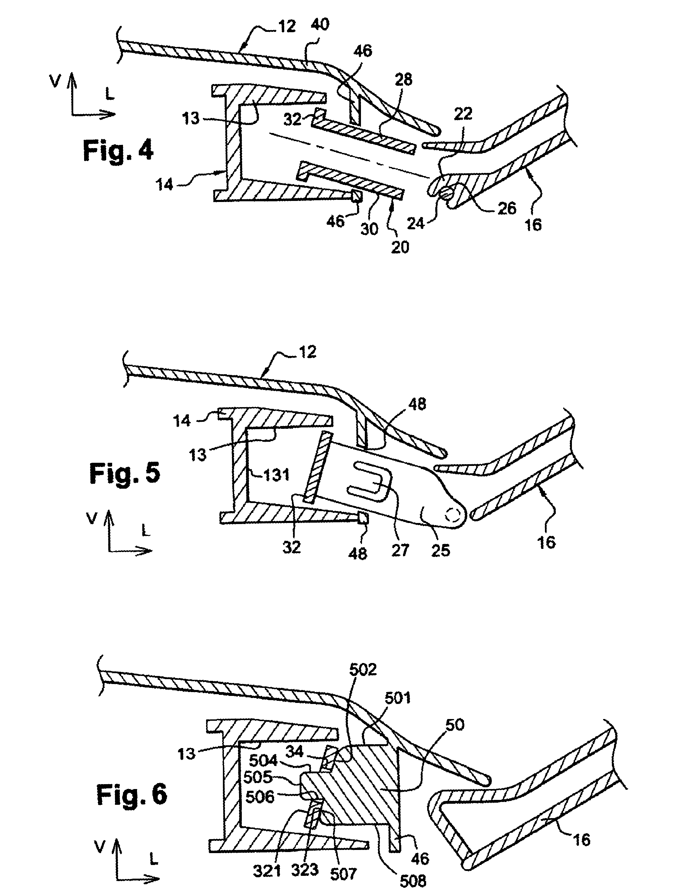

- la figure 4 est une section selon la ligne IV-IV de la figure 3,
- la figure 5 est une section selon la ligne V-V de la figure 3,
- la figure 6 est une section selon la ligne VI-VI de la figure 3.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Traditionnellement, un véhicule automobile est équipé d'une planche de bord 10, pourvue d'un coffre 12 de boîte à gant adapté à être monté dans un cadre 14 de la planche 10 délimitant une fenêtre 11 de boîte à gant. Typiquement, le coffre 12 de boîte à gant est prévu pour être fermé par une porte.

L'invention a trait à un dispositif d'articulation d'un volet sur un dormant autour d'un axe transversal dans un habitacle de véhicule automobile. Dans l'exemple de réalisation du dispositif selon l'invention qui est décrit en relation avec les figures, le volet est une porte 16 de coffre 12 de boîte à gant.

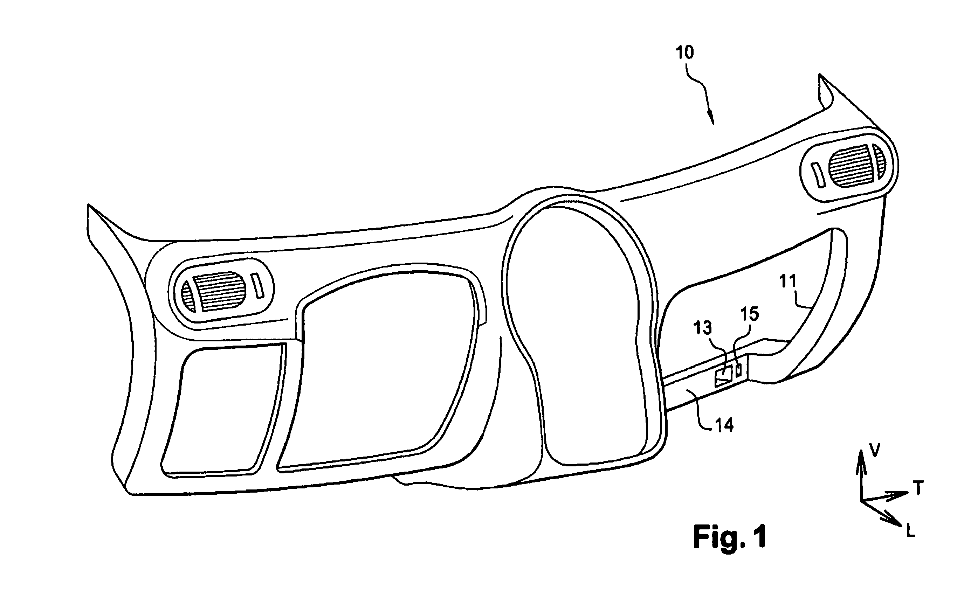

Le cadre 14 comporte, sur une poutre délimitant la partie inférieure de la fenêtre 11, deux logements 13 en forme de parallélépipède rectangle. Latéralement à chacun des logement, la poutre du cadre 14 comporte des cavités 15 aussi en forme de parallélépipède rectangle, mais de dimensions inférieures. Un seul des logements 13 et une seule des cavités 15 sont représentés à la figure 1.

Dans le dispositif selon l'invention, deux charnons fixes 20 sont reliés au dormant, en l'espèce le coffre 12 de la boîte à gant. Chaque charnon fixe 20 est rapporté sur le dormant. Comme il sera expliqué plus en détail ultérieurement, chaque charnon fixe est une pièce intermédiaire entre le volet 16 et le cadre 14 du dormant.

Deux charnons mobiles 22 sont reliés au volet 16. Dans l'exemple représenté, les charnons mobiles 22 sont moulés avec la peau externe du volet 16 visible par un utilisateur en position de fermeture du volet pour obturation du coffre 12.

Les charnons fixes 20 sont identiques, un seul est décrit ci-après.

Chaque charnon fixe 20 comporte un tronc auquel, à une extrémité avant, est raccordé une platine 32. Le tronc comporte, à l'autre extrémité, une barre cylindrique 24 formant axe de charnière. La barre 24 est située à l'extrémité arrière de deux flasques latéraux 25. Le tronc du charnon fixe 20 comporte un flasque supérieur 28 et un flasque inférieur 30, raccordés aux flasques latéraux 25.

Chaque flasque latéral 25 comporte des pattes d'encliquetage 27 latérales.

La platine 32 est raccordée sensiblement perpendiculairement aux flasques 25, 28, 30, à leur extrémité avant. La platine 32 comporte une face avant 321 et une face arrière 323. La platine 32 délimite deux trous latéraux 34.

Le charnon mobile 22 comporte un crochet avec logement cylindrique ouvert 26 adapté à recevoir la barre 24 pour rotation du volet 16. La barre 24 forme un axe transversal de rotation.

Le coffre 12 de boîte à gant forme un coffre avec un paroi inférieure 40, une paroi avant verticale et deux parois latérales 44 verticales.

Le coffre 12 comporte, sur la partie inférieure du pourtour de son embouchure, une paroi transversale 46. La paroi transversale 46 est sensiblement verticale. La paroi transversale 46 est pourvue de deux zones actives de fixation qui sont munies d'éléments de fixation. Les zones de fixations étant symétrique par rapport à un plan longitudinal vertical passant par le milieu de la paroi transversale 46, une seule des zones va être décrite ci-après.

Parmi les éléments de fixation, chaque zone de fixation comporte une ouverture 48. Chaque ouverture 48 est prévue pour coopérer avec un charnon fixe 20, en regard d'un logement 13.

Chaque zone de fixation comporte des éléments mâles, latéralement à chaque ouverture 48, pour coopérer avec un charnon fixe 20, en regard d'un logement 13.

Les éléments mâles comportent une lame longitudinale 50 entre deux lamelles 52. Les lames 50 et lamelles 52 forment des pions ménagés sur la paroi transversale 46. La hauteur des lamelles 52 correspond sensiblement à la largeur des trous 34 de la platine 32.

Chaque lame 50 comporte une base raccordée à la paroi transversale 46. La hauteur de la base au raccordement avec la paroi 46 est supérieure à la hauteur des lamelles 52, de sorte que la tranche avant 54 de la lamelle forme une surface d'appui adaptée à coopérer avec la face arrière 323 de la platine 32.

Du haut vers le bas, la tranche de la lame 50 comporte une première surface horizontale haute 501, une première surface avant 502 inclinée de l'arrière vers l'avant, une deuxième surface horizontale 504, une surface avant verticale 505, une surface horizontale 506, une deuxième surface avant incliné 507 et une surface basse sensiblement horizontale 508. Les surfaces 502 et 508 sont raccordées à la paroi transversale 46. Les surfaces inclinées 502 et 507 sont adaptées à coopérer en appui avec la face arrière 323 de la platine 32.

Les éléments mâles comportent, latéralement aux ouvertures 48, des tenons 60 munis d'organes d'encliquetages 62, destinés à s'engager dans les cavités 15 du cadre 14.

Le coffre 12 de boîte à gant, les charnons fixes 20 et les charnons mobiles sont assemblés dans la planche de bord 10 comme décrit ci-dessous, pour être dans un état d'utilisation normal.

Chaque charnon fixe 20 est monté sur le coffre 12 en engageant le tronc de l'avant vers l'arrière dans une ouverture 48, jusqu'à ce que la surface 323 entre en contact avec les surfaces inclinées 502 et 507. Une portion d'extrémité avant de chacune des lames 50 et lamelles 52 est engagée dans un des trous 34 correspondant. En particulier, la portion avant de chaque lamelle 50, dont la tranche est constituée par les surfaces 504, 505 et 506, est en correspondance avec un trou 34. Les pattes d'encliquetage 27 des flasques 25 sont engagées avec le pourtour de l'ouverture 48 correspondante afin de maintenir le contact entre la surface 323 et les surfaces inclinées 502 et 507. Un point d'adhésif ou un point de soudure peut être appliqué sur les lames 50 et lamelles 52 à leur interface avec le trou 34 correspondant, au bénéfice de la fixation et de l'acoustique du véhicule en évitant le déplacement mutuel des lames 50 et lamelles 52 dans les trous 34, ce déplacement pouvant générer des grincements.

Le coffre 12 muni des charnons fixe 20 est ensuite engagé dans la fenêtre 11 de la planche 10, de l'arrière vers l'avant. La paroi transversale 46 est en regard de la poutre inférieure du cadre 14. Les tenons 60 sont engagés dans les cavités 15, avec les organes d'encliquetages 62 accrochés dans les cavités 15, les cavités 15 formant mortaise. La partie haute du coffre 12 est fixée par encliquetage ou vissage avec le cadre 14.

Le volet 17 est ensuite monté sur le coffre 12. A cet effet, le charnon mobile 22 est monté sur le charnon fixe 20 en engageant la barre 24 dans le logement cylindrique 26.

En cas de choc lors d'un accident violent, si un genou d'un usager entre en contact avec le volet 16, en particulier à proximité des charnières d'articulation comportant le charnon fixe 20 et le charnon mobile 22, le dispositif d'articulation passe de son état d'utilisation normale à un état escamoté dans lequel le corps du charnon fixe 20 est enfoncé dans le logement 13. Lors du passage de l'état d'utilisation normale à l'état escamoté, le corps du charnon fixe 20 se déplace de l'arrière vers l'avant à travers l'ouverture 48 sous l'effort transmis par du genou. Le charnon fixe 20 se déplace suite à la rupture de sa fixation sur la paroi transversale 46.

Lors du déplacement, le charnon fixe 20 est guidé dans le logement 13 et dans l'ouverture 48, avec absorption d'énergie. L'absorption d'énergie est favorable à la sécurité en évitant des lésions ou en limitant des lésions.

L'absorption d'énergie est consécutive au démontage des pattes d'encliquetage 27 initialement accrochées dans l'ouverture 48. De plus, dans le cas où les lames 50 ou lamelles 52 sont collées, le décollage absorbe aussi de l'énergie. Une autre possibilité pour l'absorption d'énergie consiste à prévoir la possibilité d'une rupture du raccordement entre le corps et la platine 32 du charnon fixe 20. Dans ce cas, la portion de raccordement entre de la platine 32 sur le corps est sécable.

Dans l'état escamoté, l'extrémité avant du charnon fixe 20 est en butée longitudinale contre la paroi de fond 131 du logement 13, à l'avant de ce dernier. En alternative à la butée du charnon fixe 20 contre la paroi de fond 131 du logement 13 ou en complément de cette butée, la paroi transversale 46 peut venir en butée contre la poutre inférieure du cadre 14. La ou les butées longitudinales permettent de limiter le déplacement longitudinal du charnon mobile, au bénéfice de la sécurité.

La partie inférieure du volet 14 peut être en contact avec la paroi transversale 46, après rupture éventuelle de la liaison entre la barre 24 et du logement cylindrique 26, avec complément d'absorption d'énergie.

Avantageusement, le charnon fixe 20 est fixé à l'arrière de la paroi transversale 46 et il est en appui à l'avant de ladite paroi 46. Ce type de montage du charnon fixe 20 est favorable à la solidité du dispositif quand il est sollicité en arrachement de l'avant vers l'arrière, par exemple lors d'un traction sur le volet 16.

De plus, comme décrit ci-dessus, ce type de montage permet au dispositif selon l'invention de constituer un dispositif de sécurité, le volet étant placé dans une zone du véhicule dans laquelle un membre d'un utilisateur assis sur un siège du véhicule est susceptible de se déplacer lors d'un choc, en évitant des lésions ou en limitant des lésions.

Le dispositif selon l'invention peut être utilisé par exemple pour un volet formant abattant de tablette et susceptible d'entrer en contact avec un membre d'un usager de véhicule.

## Revendications

1. Dispositif d'articulation d'un volet (16) sur un dormant (12, 14) autour d'un axe transversal (24) dans un habitacle de véhicule automobile comportant un avant et un arrière, le dispositif comportant un charnon fixe (20) relié au dormant et un charnon mobile (22) relié au volet,
le dormant (12, 14) comporte une paroi transversale (46) de fixation,
dans une position d'utilisation normale, une partie avant du charnon fixe (20) est fixée sur la paroi transversale (46),
une partie arrière du charnon fixe (20) est fixée de manière à former autour dudit volet (16), à l'arrière de la paroi transversale (46), **caractérisé en ce que**,
la fixation du charnon fixe (20) sur la paroi transversale (46) est adaptée à se rompre au bénéfice de la sécurité des occupants en passant de l'état d'utilisation normale à l'état escamoté, lorsque le charnon fixe est soumis à un choc longitudinal de l'arrière vers l'avant lors d'un accident,
le charnon fixe se déplace de l'arrière vers l'avant suite à la rupture de ladite fixation lors du passage de l'état d'utilisation normale à l'état escamoté, le dispositif constituant un dispositif de sécurité en passant de l'état d'utilisation normale à l'état escamoté.

2. Dispositif selon la revendication 1, **caractérisé en ce qu'**il comporte des moyens de butée longitudinale (131, 14) du charnon fixe (20) de manière à limiter son déplacement.

3. Dispositif selon l'une quelconque des revendications précédentes, **caractérisé en ce qu'**il comporte des moyens de guidage (48, 13) du charnon fixe lors de son déplacement.

4. Dispositif selon l'une quelconque des revendications précédentes, **caractérisé en ce qu'**il comporte des moyens sécables (32) de fixation du charnon fixe (20) sur la paroi transversale (46).

5. Dispositif selon l'une quelconque des revendications précédentes, **caractérisé en ce que** le charnon fixe (20) comporte une platine (32) adaptée à coopérer avec la paroi transversale (46).

6. Dispositif selon la revendication précédente, **caractérisé en ce qu'**une face arrière (323) de la platine (32) est adaptée à coopérer avec une face avant (502, 507) de la paroi transversale (46).

7. Dispositif selon l'une quelconque des revendications précédentes, **caractérisé en ce que** le charnon fixe (20) délimite un trou (34) adapté à coopérer avec un pion (50, 52) ménagé sur la paroi transversale (46).

8. Dispositif selon l'une quelconque des revendications précédentes, **caractérisé en ce que** la paroi transversale (46) délimite une ouverture (48) à travers laquelle est engagé le charnon fixe (20) et à travers laquelle le charnon fixe (20) est susceptible de se déplacer après rupture de la fixation du charnon fixe (20) sur la paroi transversale (46).

9. Véhicule **caractérisé en ce qu'**il comporte un dispositif selon l'une quelconque des revendications précédentes, le dispositif étant un dispositif de sécurité, le volet (16) étant placé dans une zone du véhicule dans laquelle un membre d'un utilisateur assis sur un siège du véhicule est susceptible de se déplacer lors d'un choc.

10. Véhicule automobile selon la revendication précédente, **caractérisé en ce que** le volet (16) est une porte d'un coffre d'une planche de bord (10) adaptée à être en regard d'un genou d'un utilisateur.

## Claims

1. Device for the articulation of a flap (16) on a frame (12, 14) about a transverse axis (24) in a motor vehicle passenger compartment comprising a front and a rear, the device comprising a fixed knuckle (20) connected to the frame and a movable knuckle (22) connected to the flap; the frame (12, 14) comprises a transverse attachment wall (46); in a position of normal use, a front portion of the fixed knuckle (20) is attached to the transverse wall (46); a rear portion of the fixed knuckle (20) is attached so as to rotate about the said flap (16), at the rear of the transverse wall (46), **characterized in that** the attachment of the fixed knuckle (20) to the transverse wall (46) is adapted to break for the benefit of the safety of the occupants by passing from the state of normal use to the retracted state, when the fixed knuckle is subjected to a longitudinal impact from the rear to the front during an accident; the fixed knuckle moves from the rear to the front following the breakage of the said attachment during the passage from the state of normal use to the retracted state, the device forming a safety device by passing from the state of normal use to the retracted state.

2. Device according to Claim 1, **characterized in that** it comprises means (131, 14) for the longitudinal abutment of the fixed knuckle (20) so as to limit its movement.

3. Device according to any one of the preceding claims, **characterized in that** it comprises means (48, 13) for guiding the fixed knuckle during its movement.

4. Device according to any one of the preceding claims, **characterized in that** it comprises breakable means (32) of attachment of the fixed knuckle (20) to the transverse wall (46).

5. Device according to any one of the preceding claims, **characterized in that** the fixed knuckle (20) comprises a plate (32) suitable for interacting with the transverse wall (46).

6. Device according to the preceding claim, **characterized in that** a rear face (323) of the plate (32) is suitable for interacting with a front face (502, 507) of the transverse wall (46).

7. Device according to any one of the preceding claims, **characterized in that** the fixed knuckle (20) delimits a hole (34) suitable for interacting with a pin (50, 52) arranged on the transverse wall (46).

8. Device according to any one of the preceding claims, **characterized in that** the transverse wall (46) delimits an opening (48) through which the fixed knuckle (20) is engaged and through which the fixed knuckle (20) is capable of moving after the breakage of the attachment of the fixed knuckle (20) to the transverse wall (46).

9. Vehicle **characterized in that** it comprises a device according to any one of the preceding claims, the device being a safety device, the flap (16) being placed in an area of the vehicle in which a limb of a user seated on a seat of the vehicle is likely to move during an impact.

10. Motor vehicle according to the preceding claim, **characterized in that** the flap (16) is a door of a compartment of a dashboard (10) suitable for being opposite a user's knee.

## Patentansprüche

1. Vorrichtung zur Gelenkverbindung einer Klappe (16) mit einem Rahmen (12, 14) um eine Querachse (24) in einem Kraftfahrzeuginnenraum mit einem vorderen Bereich und einem hinteren Bereich, wobei die Vorrichtung eine mit dem Rahmen verbundene ortsfeste Scharnierhälfte (20) und eine mit der Klappe verbundene bewegliche Scharnierhälfte (22) aufweist, wobei der Rahmen (12, 14) eine Befestigungs-Querwand (46) aufweist, wobei in einer normalen Benutzungsstellung ein vorderer Bereich der ortsfesten Scharnierhälfte (20) an der Querwand (46) befestigt ist, wobei ein hinterer Bereich der ortsfesten Scharnierhälfte (20) so an der Rückseite der Querwand (46) befestigt ist, dass er um die Klappe (16) dreht, **dadurch gekennzeichnet, dass** die Befestigung der ortsfesten Scharnierhälfte (20) an der Querwand (46) zugunsten der Sicherheit der Insassen brechen kann, indem sie vom Zustand der normalen Benutzung in den eingezogenen Zustand übergeht, wenn die ortsfeste Scharnierhälfte bei einem Unfall einen Längsstoß von hinten nach vorne erfährt, wobei die ortsfeste Scharnierhälfte sich nach dem Bruch der Befestigung beim Übergang vom normalen Benutzungszustand zum eingezogenen Zustand von hinten nach vorne bewegt, wobei die Vorrichtung eine Sicherheitsvorrichtung bildet, indem sie vom normalen Benutzungszustand in den eingezogenen Zustand übergeht.

2. Vorrichtung nach Anspruch 1, **dadurch gekennzeichnet, dass** sie Längsanschlagmittel (131, 14) für die ortsfeste Scharnierhälfte (20) aufweist, um ihre Verschiebung zu begrenzen.

3. Vorrichtung nach einem der vorhergehenden Ansprüche, **dadurch gekennzeichnet, dass** sie Führungsmittel (48, 13) für die ortsfeste Scharnierhälfte bei ihrer Verschiebung aufweist.

4. Vorrichtung nach einem der vorhergehenden Ansprüche, **dadurch gekennzeichnet, dass** sie trennbare Mittel (32) zur Befestigung der ortsfesten Scharnierhälfte (20) an der Querwand (46) aufweist.

5. Vorrichtung nach einem der vorhergehenden Ansprüche, **dadurch gekennzeichnet, dass** die ortsfeste Scharnierhälfte (20) eine Platte (32) aufweist, die angeordnet ist, um mit der Querwand (46) zusammenzuwirken.

6. Vorrichtung nach dem vorhergehenden Anspruch, **dadurch gekennzeichnet, dass** eine Rückseite (323) der Platte (32) angeordnet ist, um mit einer Vorderseite (502, 507) der Querwand (46) zusammenzuwirken.

7. Vorrichtung nach einem der vorhergehenden Ansprüche, **dadurch gekennzeichnet, dass** die ortsfeste Scharnierhälfte (20) ein Loch (34) begrenzt, das mit einem Flachstift (50, 52) zusammenwirken kann, der auf der Querwand (46) ausgebildet ist.

8. Vorrichtung nach einem der vorhergehenden Ansprüche, **dadurch gekennzeichnet, dass** die Querwand (46) eine Öffnung (48) begrenzt, durch die hindurch die ortsfeste Scharnierhälfte (20) eingeführt ist und durch die hindurch die ortsfeste Scharnierhälfte (20) sich nach dem Bruch der Befestigung der ortsfesten Scharnierhälfte (20) an der Querwand (46) bewegen kann.

9. Fahrzeug, **dadurch gekennzeichnet, dass** es eine Vorrichtung nach einem der vorhergehenden Ansprüche aufweist, wobei die Vorrichtung eine Sicherheitsvorrichtung ist, wobei die Klappe (16) in einer Zone des Fahrzeugs angeordnet ist, in der ein Glied eines auf einem Sitz des Fahrzeugs sitzenden Benutzers sich bei einem Stoß verschieben kann.

10. Kraftfahrzeug nach dem vorhergehenden Anspruch, **dadurch gekennzeichnet, dass** die Klappe (16) eine Tür eines Fachs eines Armaturenbretts (10) ist, die angeordnet ist, um sich gegenüber einem Knie eines Benutzers zu befinden.
